# EUROPEAN PATENT SPECIFICATION

(11) **EP 0 572 763 B1**
(45) Date of publication and mention of the grant of the patent: **02.10.1996**
(21) Application number: 93102998.7
(22) Date of filing: 25.02.1993
(51) Int. Cl.: C08L 27/06, C08K 3/00

(54) **Molding composition**
Formmasse
Composition pour moulage

(30) Priority: 03.06.1992 JP 168409/92; 30.10.1992 JP 316222/92; 05.06.1992 JP 172013/92
(43) Date of publication of application: 08.12.1993
(73) Proprietor: ASAHI GLASS COMPANY LTD., Chiyoda-ku Tokyo 100 (JP)
(72) Inventor: Tanabe, Kiyoshi, Asahi Glass Company Ltd., Yokohama-shi, Kanagawa-ken (JP); Honmura, Satoru, Asahi Glass Company Ltd., Yokohama-shi, Kanagawa-ken (JP); Hayashi, Takao, Asahi Glass Company Ltd., Chiyoda-ku, Tokyo (JP)
(74) Representative: Wächtershäuser, Günter, Prof. Dr.

(56) References cited:
- EP-A- 0 420 302
- DE-A- 1 494 040
- FR-A- 2 436 157
- GB-A- 2 191 204

## Description

The present invention relates to a composition for a molded product which shows excellent deformation-suppressing effects at a high temperature and a molding composition for such a molded product.

Resin materials are excellent in moldability, and they are widely used as materials to obtain molded products of various shapes. However, in general, many of such resin materials are readily flammable, and at a high temperature during e.g. a fire, they undergo carbonization or burning out and thus can not maintain the shapes of the molded products. Further, even if the resin material itself is hardly flammable, a thermoplastic has flow properties at a temperature of at least the melting or softening point, and accordingly, its molded product is likely to undergo a substantial deformation at such a high temperature. As the resin materials are inferior in the fire-proofing properties, as described above, their use in the building field is rather limited.

Heretofore, with a molded product of a composition having an inorganic filler blended to a thermoplastic resin material, it has been difficult to suppress the deformation of the molded product by preventing the flow of the resin at a high temperature. Namely, a thermoplastic resin has flow properties at a temperature of at least the softening point, and the inorganic filler dispersed in such a resin tends to flow together with the resin, whereby the molded product undergoes a substantial deformation or eventually loses its original shape. Further, a smoke is likely to be generated at the time of a fire, and in many cases, it is desired to prevent such smoking.

It is an object of the present invention to provide a molded product whereby flow of the resin at a high temperature can be prevented and deformation can be suppressed.

The present invention provides a molding or molded composition which consists of from 5 to 50 wt% of organic components including an organic binder as the main component and from 50 to 95 wt% of inorganic components and which comprises an organic binder including a vinyl chloride type polymer as the main component, a refractory inorganic material having a melting or softening point of at least 800°C, an inorganic material having a melting or softening point of lower than 800°C and an organic or inorganic crosslinking agent capable of crosslinking the vinyl chloride type polymer at a high temperature.

Now, the present invention will be described in detail with reference to the preferred embodiments.

In the present invention, the organic binder includes, as the main component, a vinyl chloride type polymer or a vinyl chloride type polymer composition (a vinyl chloride resin) having an additive such as a blend polymer, a stabilizer or a lubricant incorporated to such a vinyl chloride type polymer. The vinyl chloride type polymer is composed of a homopolymer or a copolymer of vinyl chloride. In the case of a copolymer, it is preferably a copolymer wherein vinyl chloride is used as the main monomer.

The vinyl chloride type copolymer may, for example, be a copolymer of vinyl chloride with a monomer such as vinyl acetate, ethylene, propylene, an acrylic acid ester or a methacrylic acid ester. The blend polymer to be incorporated to the vinyl chloride type polymer may, for example, be a vinyl acetate resin, an ethylene-vinyl acetate resin, a MBS resin (a methyl methacrylatebutadiene-styrene copolymer) or a chlorinated polyethylene resin. The main vinyl chloride type polymer includes, for example, vinyl chloride polymers of different monomer compositions.

The vinyl chloride type polymer in the present invention is preferably a polymer or a polymer mixture wherein vinyl chloride polymer units are at least 50 wt%, particularly at least 70 wt%, of the total polymer units of all monomers.

The additive to be blended to the vinyl chloride polymer includes various additives which are commonly incorporated to vinyl chloride resins. For example, it includes a plasticizer such as a phthalic acid ester, a lubricant such as a stearic acid derivative, an antioxidant such as a hindered phenol, a heat stabilizer such as an organic tin compound, a ultraviolet absorber such as a benzotriazole compound, a coloring agent such as a pigment, an antistatic agent such as a surfactant, a flame retardant, a filler (excluding inorganic fillers which will be described hereinafter), etc.

The inorganic components include at least two components of a refractory inorganic material having a melting or softening point of at least 800°C and an inorganic material having a melting or softening point of lower than 800°C, as essential components. Further, when the after-mentioned organic crosslinking agent is not used, an inorganic crosslinking agent capable of crosslinking the vinyl chloride type polymer at a high temperature is included as an essential component. Each of such components may comprise two or more materials of different types. The inorganic components may further contain other inorganic components.

The refractory inorganic material is an inorganic material having a melting or softening point of not lower than 800°C, but it may be a compound which discharges water of crystallization or the like at a temperature of lower than 800°C or a compound which reacts or decomposes at a temperature lower than 800°C to form a refractory inorganic material anew. Specifically, it includes, for example, alumina, aluminum hydroxide, magnesia, magnesium hydroxide, magnesium carbonate, basic magnesium carbonate, basic magnesium sulfate, silica, aluminum silicate, calcium carbonate and clay. The refractory inorganic material is preferably at least one member selected from the group consisting of alumina, aluminum hydroxide, magnesia, magnesium hydroxide, basic magnesium carbonate and basic magnesium sulfate. These materials also have smoke-suppressing effects, and thus they are very effective as fire-proofing building materials.

The inorganic material having a melting or softening point of lower than 800°C is preferably a so-called low melting point glass. The melting or softening point of this inorganic material is preferably higher than the molding temperature of the composition of the present invention. Namely, it preferably has a melting or softening point higher than 200°C which is the upper limit of the molding temperature of a usual vinyl chloride type resin. The melting or softening point of this inorganic material is preferably from 300 to 700°C. Two or more of such inorganic materials may be used in combination. In such a case, the melting or softening points of such materials may be different from one another. In some cases, it is preferred to use an inorganic material having a relatively low melting or softening point and an inorganic material having a relatively high melting or softening point in combination.

The so-called lower melting point glass includes, for example, non-crystalline low melting point glass so-called frit and crystallized glass. Specifically, it includes, for example, boric acid type glass, water-containing phosphate type glass, tellurite glass, chalcogenite glass, lead type glass and sulfate type glass. Among them, boric acid type glass and lead type glass such as B₂O₃-PbO-ZnO, B₂O₃-PbO-SiO₂, ZnO-B₂O₃-PbO and ZnO-B₂O₃-SiO₂, are preferred. Particularly preferred as the low melting point glass is sulfate type glass having smoke-suppressing effects. For example, low melting point glass of a sulfate type such as K₂SO₄-Na₂SO₄-ZnSO₄ may be used.

The inorganic crosslinking agent capable of crosslinking the vinyl chloride type polymer at a high temperature, may, for example, be calcium silicate, zinc oxide or zinc chloride. Particularly preferred is calcium silicate. As such calcium silicate, fibrous or plate-like powder (such as xonotlite, wollastonite or tobermorite) is preferred. Such an inorganic crosslinking agent is a compound capable of crosslinking the vinyl chloride type polymer at a high temperature of lower than 800°C. Particularly preferred is a compound capable of crosslinking the vinyl chloride type polymer at a temperature of from 200 to 700°C.

The organic crosslinking agent capable of crosslinking the vinyl chloride type polymer at a high temperature is preferably at least one organic compound selected from the group consisting of a thiol compound, a radical-forming agent and an α,β-unsaturated compound. Such an organic crosslinking agent is a- compound capable of crosslinking the vinyl chloride type polymer at a high temperature of lower than 800°C. Particularly preferred is a compound capable of crosslinking the vinyl chloride type polymer at a temperature of from 100 to 400°C.

Preferably, this organic crosslinking agent does not substantially crosslink the vinyl chloride type polymer when a molding composition is molded to obtain a molded product. Namely, it preferably remains as an organic crosslinking agent in the molded product after molding. Accordingly, in a case of e.g. a radical-forming agent, it is preferably a radical-forming compound having a high temperature stability so-called a high temperature decomposable type.

However, the organic crosslinking agent may be the one which is capable of crosslinking the vinyl chloride type polymer to some extent when the composition is molded. In such a case, it must be a crosslinking agent which does not make the molding of the composition difficult due to the crosslinking during the molding operation.

This organic crosslinking agent is used preferably in combination with a crosslinking accelerator or a crosslinking adjuvant. For example, when a thiol compound is to be used, it is preferred to use a crosslinking accelerator such as magnesium oxide in combination. This magnesium oxide itself is an inorganic compound and can be used as a member of the after-mentioned inorganic components. The upper limit of its amount is in accordance with the preferred range of the amount of the after-mentioned inorganic components, and the lower limit is an effective amount as a crosslinking accelerator. Further, when a radical-forming agent is to be used, it is preferred to use an unsaturated compound such as triallyl isocyanurate (TAIC) in combination.

The thiol compound useful as the organic crosslinking agent is preferably a compound having at least two mercapto groups. More preferred is a compound having a 1,3,5-triazine ring (a s-triazine type compound). Specifically, the thiol compound may, for example, be an aromatic thiol such as 3,4-toluene dithiol, an aliphatic thiol such as butanediol di(thioglycolate) or a s-triazine type thiol such as 2-dibutylamino-4,6-dimercapto-s-triazine, 2-phenylamino-4,6-dimercapto-s-triazine or 2,4,6-trimercapto-s-triazine. Particularly preferred is 2-dibutylamino-4,6-dimercapto-s-triazine.

The radical-forming agent useful as the organic crosslinking agent is preferably a so-called high temperature decomposable type radical-forming agent. For example, an unstable compound capable of generating radicals at a relatively high temperature such as a high temperature decomposable peroxide type compound or dicumyl (i.e. 2,3-dimethyl-2,3-diphenylbutane) is preferred. Particularly preferred is a peroxide type compound such as dicumyl peroxide.

The peroxide type compound may, for example, be a ketone peroxide type compound, a peroxyketal type compound, a hydroperoxide type compound, a dialkyl peroxide type compound, a peroxyester type compound or a peroxycarbonate type compound. Specifically, the peroxide type compound includes, for example, the following compounds:

Methyl ethyl ketone peroxide, cyclohexanone peroxide, methylcyclohexanone peroxide, 1,1-bis(t-butylperoxy)-3,3,5-trimethylcyclohexane, 1,1-bis(t-butylperoxy)-cyclohexane, 2,2-bis(t-butylperoxy)-octane, 2,2-bis(t-butylperoxy)-butane, t-butylhydroperoxide, cumene hydroperoxide, diisopropylbenzene hydroperoxide, p-menthane hydroperoxide, 2,5-dimethylhexane-2,5-dihydroperoxide, 1,1,3,3-tetramethylbutyl hydroperoxide, di-t-butyl peroxide, t-butylcumyl peroxide, dicumyl peroxide, α,α'-bis(t-butylperoxy-m-isopropyl)benzene, 2,5-dimethyl-2,5-di(t-butylperoxy)hexane, 2,5-dimethyl-2,5-di(t-butylperoxy)hexyne, t-butylperoxyacetate, t-butylperoxy-3,5,5-trimethylhexanoate, t-butylperoxylaurate, t-butylperoxybenzoate, di-t-butylperoxyisophthalate, 2,5-dimethyl-2,5-di(benzoylperoxy)hexane, t-butylperoxymaleic acid, t-butylperoxyisopropylcarbonate and t-butylperoxyallylcarbonate.

The α,β-unsaturated compound is a compound having at least one, preferably two, carbon-carbon double bond or triple bond. Such an unsaturated compound is used preferably in combination with a radical-forming agent as mentioned above. Specifically, the unsaturated compound includes, for example, the following compounds. Particularly preferred is TAIC, and this TAIC is used preferably in combination with dicumyl-peroxide.

Triallyl isocyanurate (TAIC), 2,4,6-triallyloxy-1,3,5-triazine (TAC), 1,3,5-triacryloylhexahydro-S-triazine (TAF), trimethallyl isocyanurate, p-quinonedioxime, p,p'-dibenzoylquinonedioxime, triallyl 1,2,4-benzene tricarboxylate, diallyl terephthalate, diallyl isophthalate, and 1,4,5,6,7,7-hexacylobicyclo[2,2,1]hepto-5-ene-2,3-dicarboxylic acid-di-2-propenyl ester.

The composition of the present invention preferably further contains a smoke-preventive agent. This smoke-preventive agent is preferably an inorganic compound i.e. one of inorganic components. However, other smoke-preventive agent such as an organic metal complex may also be used. In the present invention, such an organic metal complex is regarded as one of inorganic components-(because the smoke-suppressing effects derive mainly from the metal component of this complex). The smoke-preventive agent is-preferably a borate, an organic metal complex or a certain metal oxide. A particularly preferred smoke-preventive agent is a borate such as zinc borate. Further, the above-mentioned low melting point glass having smoke-suppressing effects is regarded as one type of the above-mentioned low melting point glass.

Specifically, the smoke-preventive agent includes, for example, the following compounds. Namely, the borate includes, for example, zinc borate, magnesium borate, manganese borate, barium borate, aluminum borate and borax. The organic metal complex includes, for example, ferrocene, bis(acetylacetonate)copper, bis(dimethylglyoximo)copper bis(8-hydroxyquinolino)copper and bis(salicylaldehyde)copper. The certain metal oxide includes, for example, oxides of metals selected from the group consisting of antimony, molybdenum, zirconium, nickel, titanium, iron and cobalt. Preferred smoke-preventive agents other than the borate are ferrocene and oxides of metals selected from the group consisting of molybdenum, zirconium and iron.

The proportion of inorganic components to the composition is required to be from 50 to 95 wt%. The respective proportions of inorganic components to the composition are preferably such that the refractory inorganic material having a melting or softening point of at least 800°C is from 5 to 90 wt%, the inorganic material having a melting or softening point of lower than 800°C is from 1 to 90 wt% and the inorganic crosslinking agent is from 0 to 85 wt%, provided that the total amount (the total amount of these three inorganic components plus other inorganic components, if any) is from 50 to 95 wt% to the composition. More preferably, the refractory inorganic material having a melting or softening point of at least 800°C is from 10 to 60 wt%, the inorganic material having a melting or softening point of lower than 800°C is from 5 to 45 wt% and the inorganic crosslinking agent is from 0 to 40 wt%, provided that the total amount (the total amount of these three inorganic components plus other inorganic components, if any) is from 55 to 85 wt% to the composition.

The proportion of organic components to the composition is required to be from 5 to 50 wt%, preferably from 15 to 45 wt%. The proportion of the vinyl chloride type polymer among them is from 10 to 50 wt%, preferably from 20 to 40 wt%, to the composition. Further, its proportion to the entire organic components is preferably at least 1/2 by weight. The proportion of the organic crosslinking agent to the entire composition is preferably from 0 to 25 wt%, more preferably from 0 to 20 wt%. Further, its proportion to the entire organic components is preferably at most 1/2 by weight. Further, it is preferably at most the same amount by weight to the vinyl chloride type polymer.

In the composition of the present invention, at least either one of the inorganic crosslinking agent and the organic crosslinking agent is an essential component. When the crosslinking agent is the inorganic crosslinking agent, the proportion of the inorganic crosslinking agent to the composition is preferably at least 5 wt%. The upper limit of the preferred range is 40 wt%. When the crosslinking agent is the organic crosslinking agent, the proportion of the organic crosslinking agent to the composition is preferably at least 1 wt%. The upper limit of the preferred range is 25 wt%. When the two crosslinking agents are used in combination, it is preferred to use them in a proper combination within these respective ranges. Further, when a smoke-preventive agent is incorporated, its amount is preferably from 1 to 40 wt% to the composition containing it.

The composition of the present invention is a molding composition or a composition of a molded product. The molding composition of the present invention is a composition capable of being molded by various molding means. The molding means include, for example, a press molding means, an extrusion molding means, a calender molding means and an injection molding means. The molded products include, for example, window frames, wall materials, doors, floor materials, other building parts or decorative products, furnitures, etc.

Now, the present invention will be described in further detail with reference to Examples. However, it should be understood that the present invention is by no means restricted to such specific Examples.

### EXAMPLE 1

A composition comprising 30 wt% of a vinyl chloride homopolymer (average degree of polymerization: 800), 27.5 wt% of alumina (average particle size: 1 µm), 27.5 wt% of low melting point lead glass (softening point: 400°C) and 15.wt% of calcium silicate (xonotlite), was kneaded by a roll mill at 160°C and then molded by a press to obtain a test piece. The test piece was heated by an electric furnace from room temperature to 800°C over a period of 20 minutes, whereby the degree of deformation was observed. The results are shown in Table 1 together with the proportions of components of the composition. The numerical values in the composition represent wt%.

### EXAMPLES 2 to 5

The same test as in Example 1 was conducted by using the same components as used in Example 1 and using aluminum hydroxide or magnesium hydroxide instead of alumina. The results are shown in Table 1. Further, the same test as in Example 1 was conducted by using a sulfate type glass (softening point: 420°C) having a composition of K₂SO₄-Na₂SO₄-ZnSO₄ instead of the low melting point lead glass in Example 1. The results are shown in Table 1.

### COMPARATIVE EXAMPLES 1 to 3

The same test as in Examples 1 to 4 was conducted by using the same components as used in Examples 1 to 4 except that no calcium silicate was used. The results are shown in Table 1. The compositions of the test pieces used in Examples 1 to 5 and Comparative Examples 1 to 3 and the results of evaluation of the deformation properties are shown in Table 1 (the numerical values in the compositions represent wt%). Further, evaluation of the deformation properties were conducted by the following standards:
○: No change
Δ: Slightly deformed
×: Substantially deformed or no shape was maintained.

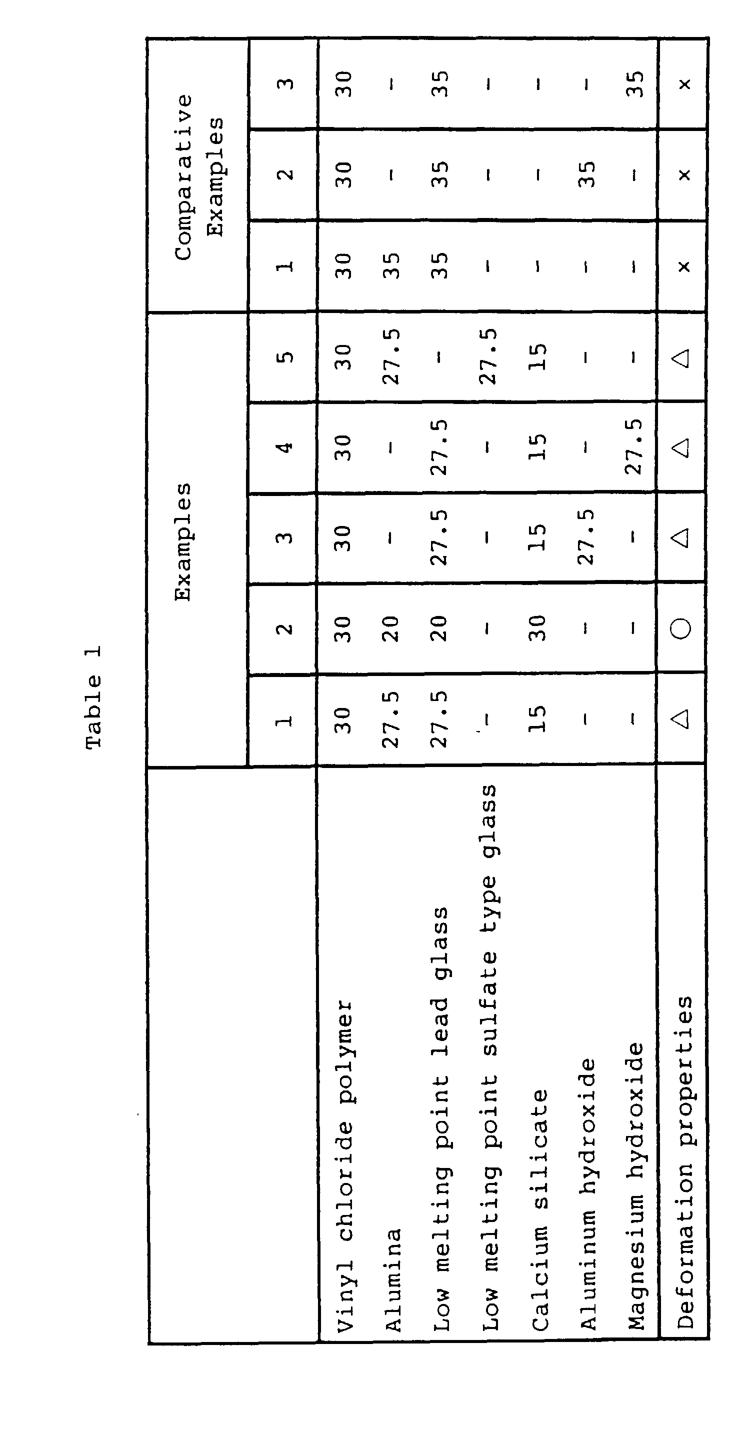

### EXAMPLE 6

A composition comprising 30 wt% of a vinyl chloride homopolymer (average degree of polymerization: 800), 26 wt% of alumina (average particle size: 1 µm), 26 wt% of low melting point lead glass (softening point: 400°C), 15 wt% of calcium silicate (xonotlite) and 3 wt% of zinc borate, was kneaded by a roll mill at 160°C and then molded by a press to obtain a test piece. The smoking properties were evaluated by means of a NBS smoking property testing apparatus (manufactured by Toyo Seiki Seisakusho Kabushiki Kaisha). The test results are shown in Table 2. The evaluation results are shown by Dₘₐₓ (maximum degree of smoking) and SOI (Smoke Obscuration Index). Further, the test results of the corresponding composition containing no zinc borate (Example 1) are also shown in Table 2. Furthermore, the smoking properties test results of a test piece obtained from the composition of Example 5 are also shown in Table 2.

### EXAMPLES 7 to 8

The same test as in Example 6 was conducted by using a composition having the same composition as in Example 6 except that molybdenum trioxide or ferrocene was used in an amount of 3 wt% instead of zinc borate in Example 6. The results are shown in Table 2.

### EXAMPLE 9

The same test as in Example 6 was conducted by using a composition having the same composition as in Example 6 except that aluminum hydroxide of the same amount was used instead of alumina in Example 6. The results are shown in Table 2. Further, the test results of the corresponding composition containing no zinc borate (Example 3) are also shown in Table 2.

**Table 2**

| | Smoke-preventive agent | Dₘₐₓ | SOI |
|---|---|---|---|
| Example 1 | Nil | 90 | 4.2 |
| Example 5 | - | 33 | 2.3 |
| Example 6 | Zinc borate | 34 | 0.3 |
| Example 7 | Molybdenum trioxide | 65 | 7.4 |
| Example 8 | Ferrocene | 69 | 2.7 |
| Example 3 | Nil | 54 | 0.3 |
| Example 9 | Zinc borate | 27 | 0.03 |

### EXAMPLE 10

A composition comprising 30 wt% of a vinyl chloride homopolymer (average degree of polymerization: 800), 27.5 wt% of aluminum (average particle size: 1 µm), 27.5 wt% of low melting point lead glass (softening point: 400°C), 7.5 wt% of 2-dibutylamino-4,6-dimercapto-s-triazine (hereinafter referred to simply as DBDMT) and 7.5 wt% of magnesium oxide (hereinafter referred to as MgO), was kneaded by a roll mill at 140°C and then molded by a press to obtain a test piece. The test piece was heated by an electric furnace from room temperature to 800°C over a period of 20 minutes, whereby the degree of deformation was observed. The results are shown in Table 3 together with the proportions of components of the composition.

### EXAMPLES 11 to 13

The same test as in Example 10 was conducted by using the same components as in Example 10 except that dicumyl, dicumyl or dicumyl peroxide and TAIC were used instead of DBDMT and MgO in the composition as identified in Table 3. The results are shown in Table 3.

### COMPARATIVE EXAMPLE 4

The same test as in Examples 10 to 12 were conducted by using the same components as used in Examples 10 to 12 without using DBDMT and MgO. The results are shown in Table 3.

The compositions of the test pieces used in Examples 10 to 13 and Comparative Example 4 and the results of evaluation of the deformation properties are shown in Table 3 (the numerical values in the compositions represent wt%). Further, the deformation properties were evaluated by the following standards:
○: No deformation
Δ: Slightly deformed
× : Substantially deformed or no shape was maintained.

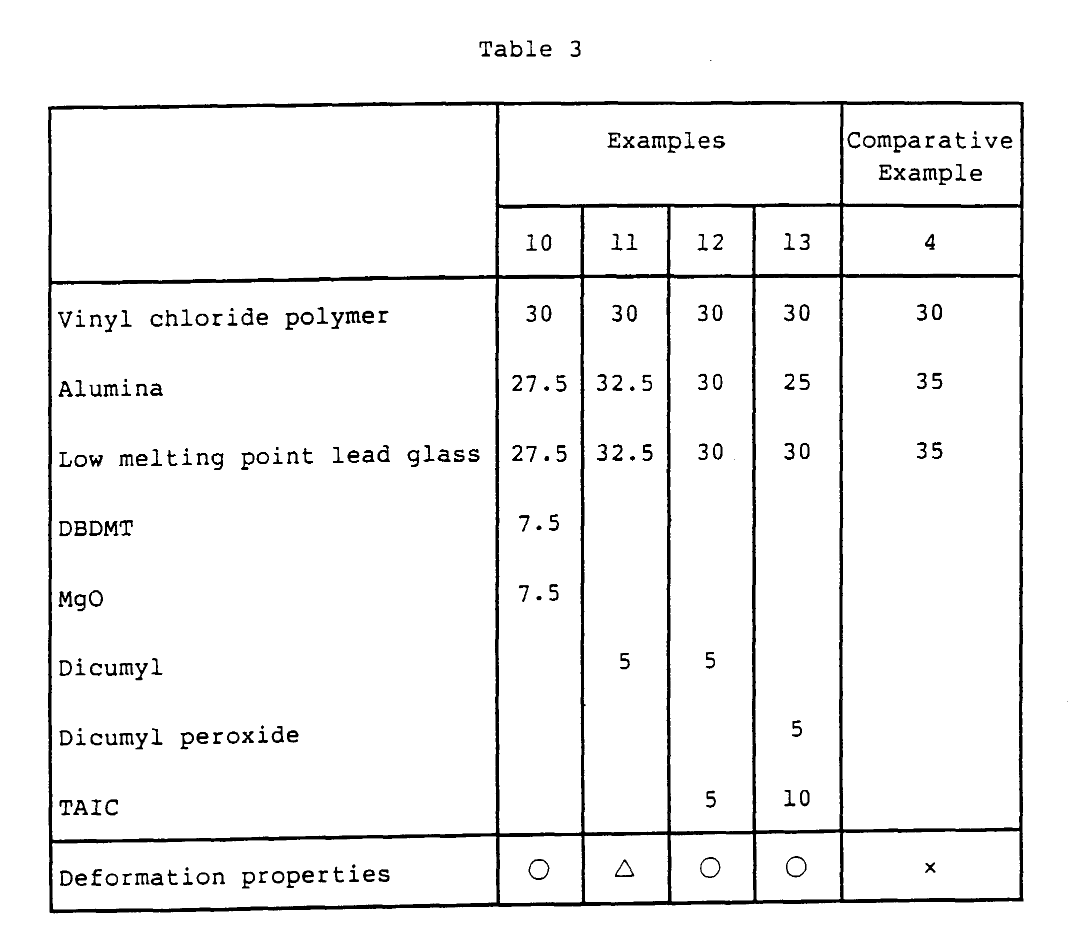

The molded product made of the composition of the present invention undergoes little deformation even when exposed under a high temperature condition of e.g. a fire and thus has good shape-maintaining properties and excellent fire-proofing properties. Further, when a smoke-preventive agent is incorporated, it can substantially suppress the degree of smoking at the time of a fire.

## Claims

1. A molding or molded composition which consists of from 5 to 50 wt% of organic components including an organic binder as the main component and from 50 to 95 wt% of inorganic components and which comprises an organic binder including a vinyl chloride type polymer as the main component, a refractory inorganic material having a melting or softening point of at least 800°C, an inorganic material having a melting or softening point of lower than 800°C and an organic or inorganic crosslinking agent capable of crosslinking the vinyl chloride type polymer at a high temperature.

2. The composition according to Claim 1, wherein the refractory inorganic material having a melting or softening point of at least 800°C is at least one member selected from the group consisting of alumina, magnesia, aluminum hydroxide, magnesium hydroxide, basic magnesium carbonate and basic magnesium sulfate.

3. The composition according to Claim 1, wherein the inorganic material having a melting or softening point of lower than 800°C is at least one member of low melting point glass.

4. The composition according to Claim 3, wherein the low melting point glass is sulfate type glass.

5. The composition according to Claim 1, wherein the inorganic crosslinking agent is at least one member selected from the group consisting of calcium silicate, zinc oxide and zinc chloride.

6. The composition according to Claim 1, wherein the inorganic crosslinking agent is fibrous or plate-like calcium silicate.

7. The composition according to Claim 1, wherein the organic crosslinking agent is at least one organic compound selected from the group consisting of a thiol compound, a radical-forming agent and an α,β-unsaturated compound.

8. The composition according to Claim 1, wherein the proportion of the crosslinking agent to the composition is from 5 to 40 wt% in the case where the crosslinking agent is an inorganic crosslinking agent and from 1 to 25 wt% in the case where the crosslinking agent is an organic crosslinking agent.

9. The composition according to Claim 1, wherein the proportions of the inorganic components to the composition are such that the refractory inorganic material having a melting or softening point of at least 800°C is from 10 to 60 wt%, the inorganic material having a melting or softening point of lower than 800°C is from 5 to 45 wt% and the inorganic crosslinking agent is from 0 to 40 wt%, provided that the total amount of these inorganic components is from 55 to 85 wt%.

10. The composition according to Claim 1, which further contains a smoke-preventive agent.

## Patentansprüche

1. Formmasse oder geformte Masse, die aus 5 bis 50 Gew.-% organischen Komponenten, einschließlich einem organischen Binder als der Hauptkomponente, und von 50 bis 95 Gew.-% aus anorganischen Komponenten besteht, und die einen organischen Binder umfaßt, der ein vinylchlorid-artiges Polymer als die Hauptkomponente, ein hochschmelzendes, anorganisches Material mit einem Schmelz- oder Erweichungspunkt von mindestens 800°C, ein anorganisches Material mit einem Schmelz- oder Erweichungspunkt von weniger als 800°C und ein organisches oder anorganisches Vernetzungsmittel, das zum Vernetzen des vinylchlorid-artigen Polymers bei einer hohen Temperatur in der Lage ist, einschließt.

2. Masse nach Anspruch 1, worin das hochschmelzende, anorganische Material, das einen Schmelz- oder Erweichungspunkt von mindestens 800°C hat, mindestens ein Material, ausgewählt aus der Gruppe bestehend aus Aluminiumoxid, Magnesiumoxid, Aluminiumhydroxid, Magnesiumhydroxid, basischem Magnesiumcarbonat und basischem Magnesiumsulfat, ist.

3. Masse nach Anspruch 1, worin das anorganische Material, das einen Schmelz- oder Erweichungspunkt von weniger als 800°C aufweist, mindestens ein Glas mit geringem Schmelzpunkt ist.

4. Masse nach Anspruch 3, worin das Glas mit einem geringen Schmelzpunkt ein Sulfat-Glas ist.

5. Masse nach Anspruch 1, worin das anorganische Vernetzungsmittel mindestens ein Material ist, ausgewählt aus der Gruppe bestehend aus Calciumsilicat, Zinkoxid und Zinkchlorid.

6. Masse nach Anspruch 1, worin das anorganische Vernetzungsmittel faserförmiges oder plattenartiges Calciumsilicat ist.

7. Masse nach Anspruch 1, worin das organische Vernetzungsmittel mindestens eine organische Verbindung ist, ausgewählt aus der Gruppe bestehend aus einer Thiol-Verbindung, einem radikal-bildenden Mittel und einer α,β-ungesättigten Verbindung.

8. Masse nach Anspruch 1, worin der Anteil des Vernetzungsmittels an der Masse für den Fall, daß das Vernetzungsmittel ein anorganisches Vernetzungsmittel ist, von 5 bis 40 Gew.-%, und für den Fall, daß das Vernetzungsmittel ein organisches Vernetzungsmittel ist, von 1 bis 25 Gew.-% beträgt.

9. Masse nach Anspruch 1, worin die Anteile der anorganischen Komponenten an der Masse derart sind, daß das hochschmelzende, anorganische Material mit einem Schmelz- oder Erweichungspunkt von mindestens 800°C von 10 bis 60 Gew.-%, das anorganische Material mit einem Schmelz- oder Erweichungspunkt von weniger als 800°C von 5 bis 45 Gew.-% und das anorganische Vernetzungsmittel von 0 bis 40 Gew.-% ausmacht, unter der Bedingung, daß die Gesamtmenge dieser anorganischen Komponenten von 55 bis 85 Gew.-% beträgt.

10. Masse nach Anspruch 1, die weiter ein rauchverhinderndes Mittel enthält.

## Revendications

1. Composition pour moulage ou moulée qui est constituée par 5 à 50% en poids de composants organiques dont un liant organique à titre de composant principal et 50 à 95% en poids de composants inorganiques et qui comprend un liant organique incluant un polymère de type chlorure de vinyle à titre de composant principal, un matériau inorganique réfractaire ayant un point de fusion ou de ramollissement d'au moins 800°C, un matériau inorganique ayant un point de fusion ou de ramollissement inférieur à 800°C et un agent de réticulation organique ou inorganique capable de réticuler le polymère de type chlorure de vinyle à une température élevée.

2. Composition selon la revendication 1, dans laquelle le matériau inorganique réfractaire ayant un point de fusion ou de ramollissement d'au moins 800°C est au moins un élément choisi dans le groupe constitué par l'alumine, la magnésie, l'hydroxyde d'aluminium, l'hydroxyde de magnésium, le carbonate basique de magnésium et le sulfate basique de magnésium.

3. Composition selon la revendication 1, dans laquelle le matériau inorganique ayant un point de fusion ou de ramollissement inférieur à 800°C est au moins un verre à bas point de fusion.

4. Composition selon la revendication 3, dans laquelle le verre à bas point de fusion est un verre de type au sulfate.

5. Composition selon la revendication 1, dans laquelle l'agent de réticulation inorganique est au moins un élément choisi dans le groupe formé par le silicate de calcium, l'oxyde de zinc et le chlorure de zinc.

6. Composition selon la revendication 1, dans laquelle l'agent de réticulation inorganique est un silicate de calcium fibreux ou en paillettes.

7. Composition selon la revendication 1, dans laquelle l'agent de réticulation organique est au moins un composé organique choisi dans le groupe formé par un composé thiol, un agent formant des radicaux et un composé insaturé en α, β.

8. Composition selon la revendication 1, dans laquelle la proportion de l'agent de réticulation par rapport à la composition est de 5 à 40% en poids, dans le cas où l'agent de réticulation est un agent de réticulation inorganique et de 1 à 25% en poids, dans le cas où l'agent de réticulation est un agent de réticulation organique.

9. Composition selon la revendication 1, dans laquelle les proportions des composés inorganiques par rapport à la composition sont telles que le matériau inorganique réfractaire ayant un point de fusion ou de ramollissement d'au moins 800°C représente de 10 à 60% en poids, le matériau inorganique ayant un point de fusion ou de ramollissement inférieur à 800°C représente de 5 à 45% en poids, et l'agent de réticulation inorganique représente de 0 à 40% en poids, à condition que la quantité totale de ces composés inorganiques représente de 55 à 85% en poids.

10. Composition selon la revendication 1, qui contient en outre un agent anti-fumigène.
